# EUROPÄISCHE PATENTSCHRIFT

(11) **EP 1 772 637 B1**
(45) Veröffentlichungstag und Bekanntmachung des Hinweises auf die Patenterteilung: **29.12.2010**
(21) Anmeldenummer: 06020824.6
(22) Anmeldetag: 04.10.2006
(51) Int. Cl.: F16B 47/00

(54) **Saugfuß für Geräteträger oder dergleichen**
Suction cup for apparatus support
Ventouse pour support d'appareil

(30) Priorität: 05.10.2005 DE 102005047809
(43) Veröffentlichungstag der Anmeldung: 11.04.2007
(73) Patentinhaber: Richter, Harald, 75331 Engelsbrand (DE)
(72) Erfinder: Richter, Harald, 75331 Engelsbrand (DE)
(74) Vertreter: Gallo, Wolfgang

(56) Entgegenhaltungen:
- US-A- 5 087 005
- US-A- 6 143 391
- US-B1- 6 478 271

## Beschreibung

Die Erfindung betrifft einen Saugfuß für Geräteträger oder dergleichen, wie sie häufig in Kraftfahrzeugen zur Halterung von Kleincomputern (sogenannten PDAs), mobilen Navigationsgeräten, Mobiltelefonen und dergleichen Anwendung finden. Zum Anbringen solcher Gerätehalter im Fahrzeug dient häufig oder vorwiegend die Windschutzscheibe, weil sie eine absolut glatte Fläche bietet und sie das Anbringen des jeweiligen Geräts im Blickfeld des Fahrers ermöglicht. Ein derartiger Saugfuß ist z.B. aus der US 6,478,271 B1 bekannt.

Das Anbringen des Saugfußes eines solchen Gerätehalters an der Windschutzscheibe bedeutet aber auch, daß der Saugfuß in besonders starkem Maße der Sonneneinstrahlung ausgesetzt ist, was für Fahrt und Stand des Fahrzeugs gleichermaßen gilt. Der Saugfuß besteht üblicherweise aus einem Gehäuse aus hartem Kunststoff und einer dessen Boden bildenden Saugermembran aus einem weichen Kunststoff. Die Saugermembran ist mittig mit einem Schaft eines Betätigungsmechanismus verbunden, mit welchem die Saugermembran mittels eines Betätigungshebels zwischen einer unwirksamen Stellung und einer Saugstellung bewegbar ist.

Die Saugermembran besteht üblicherweise aus PVC, das notwendigerweise Weichmacher enthalten muß. Gerade bei Wärmeeinwirkung, also insbesondere bei Sonneneinstrahlung, tritt ein unerwünschtes Freisetzen von Weichmacher aus dem PVC-Material der Saugermembran statt. Dies führt unter anderem dazu, daß die Saugermembran, namentlich bei lokalen Temperaturen ab etwa 60°C, mit dem Gehäuserand verklebt. Dies behindert die Beweglichkeit der Saugermembran, beeinträchtigt die Funktion des Saugfußes, und führt über kurz oder lang zum Unbrauchbarwerden des Saugfußes.

Aufgabe der Erfindung ist es, diesem Problem abzuhelfen.

Diese Aufgabe wird gemäß der Erfindung durch die im Anspruch 1 angegebene Anordnung gelöst. Vorteilhafte Ausgestaltungen der Erfindung sind Gegenstand der Unteransprüche.

Erfindungsgemäß wird zwischen dem Gehäuserand und der Saugermembran ein Trennelement angeordnet, das die Verklebung der Saugermembran mit dem Gehäuserand verhindert. Mehrere Ausführungsmöglichkeiten dazu sind nachstehend in der Beispielsbeschreibung erläutert.

In vorteilhafter Weiterbildung der Erfindung ist das Trennelement zu einer Auskleidung der Gehäuseinnenwand erweitert und als reflektives Element ausgebildet, um Wärmeeinstrahlung zu reflektieren.

Die Erfindung wird nachstehend unter Bezugnahme auf die anliegende schematische Zeichnung mehr im einzelnen beschrieben, die einen schematisierten vereinfachten Schnitt durch einen Saugfuß nach der Erfindung zeigt.

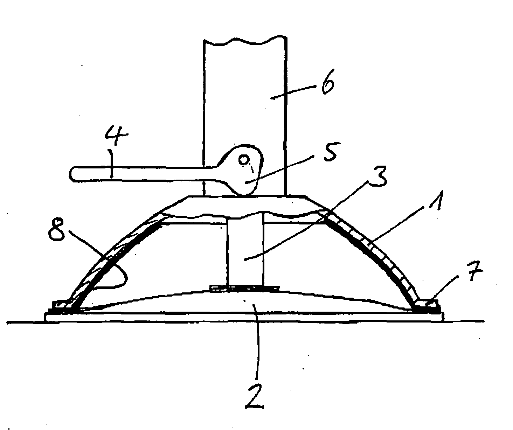

Der in der Zeichnung schematisch dargestellte Saugfuß, der in seiner Arbeitsstellung, also seiner Saugstellung, dargestellt ist, besteht aus einem Gehäuse 1 aus hartem Kunststoff, einer Saugermembran 2 aus PVC, und einem Betätigungsmechanismus, der einen mit seinem unteren Ende mit dem Mittenbereich der Saugermembran 2 verbundenen Schaft 3 und einem damit über ein Gelenk 4 verbundenen Betätigungshebel 4 mit einem sich auf dem Gehäuse abstützenden Exzenternocken 5 umfaßt. Mit dem Gehäuse 1 beispielsweise durch einstückige Ausbildung verbunden ist ein Anschlusselement 6, beim Ausführungsbeispiel in Gestalt einer Hülse zur Verbindung des Saugfußes mit einer anderen Komponente, beispielsweise einen Schwanenhals. Eine Feder zur Vorspannung der Saugermembran in ihrer Ruhestellung ist nicht dargestellt und kann innerhalb der Hülse 6 untergebracht sein und auf das obere Ende des Schafts 3 wirken.

Zwischen dem unteren Rand 7 des Gehäuses 1 und der Saugermembran 2 ist ein Trennelement 8 angeordnet, das am Gehäuse 1 fixiert ist. Das Trennelement 8 überdeckt mindestens den Randbereich 7 des Gehäuses 1, der sich in der Saugstellung des Saugfußes an der Oberseite der Saugermembran 2 abstützt. Das Trennelement 8 kann aber, insbesondere wenn es als reflektives Trennelement ausgebildet ist, sich vom Rand 7 aus einwärts über einen Teil der Innenwand oder die ganze Innenwand des Gehäuses 1 erstrecken, wie beim Ausführungsbeispiel dargestellt ist.

Das Trennelement 8 kann als reflektives Element, das Einstrahlung reflektiert, aus Metall hergestellt sein, insbesondere aus Aluminium, und zwar als dünnes Metallblech oder als Metallfolie, und kann durch Kleben, mechanisch, z.B. durch Umbördeln des Rands oder des Eindrückens des Rands an einzelnen Umfangsstellen, oder auf andere Weise mit dem Gehäuserand oder der Gehäuseinnenwandfläche verbunden werden. Der mit der Saugermembran zusammenwirkende Flächenbereich des metallenen Trennelements kann außerdem profiliert sein, beispielsweise mit einer Noppcnprägung oder vorzugsweise mit einer Rillenprägung von radial verlaufenden Rippen/Rillen, womit erreicht wird, daß die tatsächliche Berührungsfläche zwischen dem (wärmeleitenden) Metall und der PVC-Saugermembran verkleinert wird.

Alternativ kann das Trennelement als nur auf den Gehäuserand beschränkten Ring in Gestalt einer dünnen Ringscheibe aus Polyamid ausgebildet sein, da Polyamid sich nicht mit PVC verbindet. Ein solcher Polyamidring kann schuhartig auf den Gehäuserand aufgeklipst oder in diesen eingepresst sein. Eine denkbare Ausbildung des ganzen Gehäuses aus Polyamid wäre hingegen nicht wünschenswert, da Polyamid zum einen optisch nicht gut aussieht und zum anderen sich mit keinem anderen Kunststoff verkleben lässt, was Montageprobleme schafft.

Es versteht sich, daß weitere Ausführungsformen von Trennelementen 8 möglich sind, beispielsweise auch eine Zwischenlage aus textilem Gewebe oder dergleichen. Mögliche weitere Materialien können auch durch Versuche ermittelt werden. Es kommt lediglich darauf an, daß ein Verkleben des PVC-Materials der Saugermembran beim Freisetzen von Weichmachern durch Wärmeeinwirkung mit dem Gehäuserand vermieden wird.

## Patentansprüche

1. Saugfuß für Geräteträger oder dergleichen, bestehend aus einem Gehäuse (1) aus hartern Kunststoff, einer Saugermembran (2) aus weichmacherhaltigem PVC, und einem Betätigungsmechanismus (3, 4) zur Betätigung der Saugermembran (2) zwischen einer Lösestellung und einer Arbeitsstellung, **dadurch gekennzeichnet, daß** zwischen dem Gehäuse (1) und der Saugermembran (2) ein mindestens den mit der Saugermembran in Berührung kommenden Rand (7) des Gehäuses (1) abdeckendes Trennelement (8) aus einem mit dem PVC-Material der Saugermembran (2) bei Wärmeeinwirkung und/oder Freisetzung von Weichmachern nicht verklebenden Material angeordnet und am Gehäuse fixiert ist.

2. Saugfuß nach Anspruch 1, wobei das Trennelement (8) aus Metallblech oder Metallfolie besteht.

3. Saugfuß nach Anspruch 2, wobei das Trennelement nicht nur den Gehäuserand (7) überdeckt sondern sich auch teilweise oder ganz über die Innenwand des Gehäuses (1) erstreckt und als Reflektor für einfallende Strahlen dient.

4. Saugfuß nach Anspruch 1, wobei das Trennelement (8) aus Polyamid besteht.

5. Saugfuß nach einem der Ansprüche 2 bis 4, wobei die der Saugermembran zugewandte Fläche des Trennelements (8) mit einer Profilierung zur Verringerung der tatsächlichen Berührungsfläche zwischen dem Trennelement (8) und der Saugermembran (2) versehen ist.

6. Saugfuß nach Anspruch 5, wobei die Profilierung in Gestalt eines radialen Rillen/Rippen-Musters ausgebildet ist.

7. Saugfuß nach Anspruch 1, wobei das Trennelement (8) aus einem Gewebe oder anderem textilen Material besteht.

8. Saugfuß nach einem der Ansprüche 1 bis 7, wobei das Trennelement (8) durch Verkleben oder mechanische Befestigung wie Einpressen, Anklipsen, Bördeln oder örtliche Verformung mit dem Gehäuse (1) oder Gehäuserand (7) verbunden ist.

## Claims

1. Suction foot for device mount or the like, consisting of a housing (1) made of rigid plastic, a suction membrane (2) made of PVC containing plasticizers, and an actuating mechanism (3, 4) for operation of the suction membrane (2) between a release position and an operating position, **characterised in that** a parting element (8) made of a material that does not stick to the PVC material of the suction membrane (2) under the influence of heat and/or release of plasticizers, and covering at least the edge (7) of the housing (1) that contacts the suction membrane, is arranged between the housing (1) and the suction membrane (2) and fixed to the housing.

2. Suction foot according to claim 1, wherein the parting member (8) is made of a metal sheet or a metal foil.

3. Suction foot according to claim 2, wherein the parting member covers not only the housing edge (7) but also in part or totally extends over the interior wall of the housing (1) and serves as a reflector for incident rays.

4. Suction foot according to claim 1, wherein the parting member (8) is made of polyamide.

5. Suction foot according to any one of claims 2 to 4, wherein the surface of the parting member (8) facing the suction membrane is provided with a profiling for reducing the actual contact surface between the parting member (8) and the suction membrane (2).

6. Suction foot according to claim 5, wherein the profiling is formed in the shape of a radial groove/rib pattern.

7. Suction foot according to claim 1, wherein the parting member (8) is made of a fabric or another textile material.

8. Suction foot according to any one of claims 1 to 7, wherein the parting member (8) is bonded to the housing (1) or the housing edge (7) by means of glueing or mechanical attachment such as press fitting, clipping, flanging or local deformation.

## Revendications

1. Ventouse pour support d'appareil ou similaire, comprenant un boîtier (1) en matière plastique dure, une membrane aspirante (2) en PVC contenant un plastifiant et un mécanisme d'actionnement (3, 4) destiné à actionner la membrane aspirante (2) entre une position d'enlèvement et une position de travail, **caractérisée en ce qu'**un élément de séparation (8) réalisé dans un matériau ne collant pas avec le matériau PVC de la membrane aspirante (2) lors de l'effet de la chaleur et/ou la libération de plastifiants et recouvrant au moins le bord (7) du boîtier (1) venant en contact avec la membrane aspirante est disposé entre le boîtier (1) et la membrane aspirante (2) et est fixé sur le boîtier.

2. Ventouse selon la revendication 1, l'élément de séparation (8) étant réalisé en tôle métallique ou en feuille métallique.

3. Ventouse selon la revendication 2, l'élément de séparation ne recouvrant pas seulement le bord du boîtier (7) mais s'étendant aussi en partie ou complètement sur la paroi intérieure du boîtier (1) et servant de réflecteur pour des rayons incidents.

4. Ventouse selon la revendication 1, l'élément de séparation (8) étant réalisé en polyamide.

5. Ventouse selon l'une des revendications 2 à 4, la surface de l'élément de séparation (8) tournée vers la membrane aspirante étant munie d'un profilage pour réduire la surface de contact effective entre l'élément de séparation (8) et la membrane aspirante (2).

6. Ventouse selon la revendication 5, le profilage étant réalisé sous la forme d'un motif radial à rainures/nervures.

7. Ventouse selon la revendication 1, l'élément de séparation (8) étant réalisé dans un tissu ou autre matériau textile.

8. Ventouse selon l'une des revendications 1 à 7, l'élément de séparation (8) étant relié au boîtier (1) ou au bord (7) du boîtier par collage ou fixation mécanique telle que emmanchement à force, clipsage, sertissage ou formage local.
